# EUROPÄISCHE PATENTSCHRIFT

(11) **EP 3 464 771 B1**
(45) Veröffentlichungstag und Bekanntmachung des Hinweises auf die Patenterteilung: **24.06.2020**
(21) Anmeldenummer: 17720493.0
(22) Anmeldetag: 02.05.2017
(51) Int. Cl.: E06B 3/663, B32B 17/10

(54) **ISOLIERVERGLASUNG MIT ERHÖHTER DURCHBRUCHHEMMUNG UND U-FÖRMIGEM AUFNAHMEPROFIL**
INSULATING GLAZING WITH INCREASED BREAKTHROUGH INHIBITION AND U-SHAPED RECEIVING PROFILE
VITRAGE ISOLANT A HAUTE RESISTANCE A LA RUPTURE ET PROFILE DE RECEPTION EN FORME DE U

(30) Priorität: 31.05.2016 EP 16172120
(43) Veröffentlichungstag der Anmeldung: 10.04.2019
(73) Patentinhaber: SAINT-GOBAIN GLASS FRANCE, 92400 Courbevoie (FR)
(72) Erfinder: HERMENS, Ulrich, 52078 Aachen (DE); KOCHS, Rolf, 52062 Aachen (DE); NEANDER, Marcus, 52249 Eschweiler (DE); SCHREIBER, Walter, 52074 Aachen (DE)
(74) Vertreter: Schönen, Iris
(86) Internationale Anmeldenummer: PCT/EP2017/060338
(87) Internationale Veröffentlichungsnummer: WO 2017/207193

(56) Entgegenhaltungen:
- EP-A2- 1 022 424
- WO-A1-98/34521
- WO-A1-2015/152011
- US-B2- 7 743 584

## Beschreibung

Die Erfindung betrifft eine Isolierverglasung mit einem Abstandshalter, Verfahren zu deren Herstellung und deren Verwendung.

Die Wärmeleitfähigkeit von Glas ist etwa um den Faktor 2 bis 3 niedriger als die von Beton oder ähnlichen Baustoffen. Da Scheiben in den meisten Fällen jedoch deutlich dünner als vergleichbare Elemente aus Stein oder Beton ausgelegt sind, verlieren Gebäude dennoch häufig den größten Wärmeanteil über die Außenverglasung. Besonders deutlich wird dieser Effekt bei Hochhäusern mit teilweisen oder kompletten Glasfassaden. Die notwendigen Mehrkosten für Heizung und Klimaanlagen machen einen nicht zu unterschätzenden Teil der Unterhaltungskosten eines Gebäudes aus. Zudem werden im Zuge strengerer Bauvorschriften niedrigere Kohlendioxid Emissionen gefordert. Ein wichtiger Lösungsansatz hierfür sind Isolierverglasungen, die vor allem im Zuge immer schneller steigender Rohstoffpreise und strengeren Umweltschutzauflagen nicht mehr aus dem Gebäudebau wegzudenken sind.

Neben der Isolationswirkung von Verglasungen spielt je nach Anwendungsgebiet auch die Schutzwirkung von Verglasungen eine entscheidende Rolle. Norm DIN EN 356 reguliert die Prüfung von einbruchhemmenden Verglasungen. Sie beschreibt Verfahren für die Prüfung auf Durchwurfhemmung und Durchbruchhemmung. Die Prüfung auf Durchbruchhemmung erfolgt basierend auf standardisierten Hammer- und Axtschlägen, wobei der Aufwand für die Öffnung der Verglasung ermittelt wird. Die Durchbruchhemmung wird durch die drei Prüfklassen P6B bis P8B beschrieben, wobei P6B mehr als 30 Hammer- und Axtschlägen, P7B mehr als 50 Hammer- und Axtschlägen und P8B mehr als 70 Hammer- und Axtschlägen entspricht.

Die Verwendung von polymeren Scheiben zur Verbesserung der Durchbruchhemmung sowie zum Erreichen der Schutzklassen P6B bis P8B ist hinlänglich bekannt. So offenbaren beispielsweise US 4243719 A, DE 3486336 T2 und DE 102008043718 A1 Kunststoff-Glas-Laminate aus Glas und Polycarbonat oder Polymethylmethacrylat. Die flächige Verbindung der Scheiben erfolgt dabei über Gießharze oder Laminierfolien. Nach dem Stand der Technik wird vorzugsweise eine Lamination der Scheibenanordnung im Autoklavprozess durchgeführt, wobei zwischen polymeren Scheiben und benachbarter Glasscheibe in der Regel eine thermoplastische Polyurethanfolie zur Lamination verwendet wird. Derartige Laminate bieten zwar eine sehr gute Stabilität und Durchbruchhemmung, allerdings ist der Produktionsprozess aufgrund der Vielzahl erforderlicher Schritte, wie Trocknen der polymeren Scheiben oder Autoklavprozess, teuer. Ferner sind die Rohstoffkosten für thermoplastische Polyurethanfolien hoch. Darüber hinaus ist die Isolationswirkung des Laminats im Vergleich zu einschlägigen Isolierverglasungen gering. Daher ist es wünschenswert kostengünstigere Verglasungen, die eine Durchbruchhemmung und gleichzeitig eine verminderte Wärmeleitfähigkeit aufweisen, bereitzustellen.

Eine Isolierverglasung mit durchbruchhemmender Wirkung ist aus US 2005126091 A1 bekannt. Hierbei handelt es sich um eine Dreifachisolierverglasung, deren äußere Scheiben von Glasscheiben gebildet werden, zwischen denen als dritte Scheibe eine polymere Scheibe eingesetzt ist. Die polymere Scheibe ist mit den äußeren Glasscheiben über jeweils einen Abstandshalter verklebt. Dieser Aufbau verfügt nur über eine geringe mechanische Stabilität, so dass die Verglasung im Randbereich auf einfache Art und Weise mit einem Werkzeug ausgehebelt werden kann und somit keine ausreichende Einbruchssicherheit bietet.

EP 2 733 295 A1 offenbart eine Isolierverglasung umfassend eine erste Glasscheibe, eine zweite Glasscheibe und eine zwischen diesen angebrachte polymere Scheibe. Die polymere Scheibe wird dabei in ein Aufnahmeelement eingesetzt und das Aufnahmeelement wird über jeweils einen Abstandshalter mit der ersten Glasscheibe und der zweiten Glasscheibe verklebt. Die relative Positionierung der beiden Abstandshalter und des Aufnahmeelements muss passgenau mit nur geringen Toleranzen erfolgen, wodurch der Montageprozess erschwert wird.

Abstandshalter aus Materialien mit hoher Wärmeleitfähigkeit wie zum Beispiel Aluminium haben den Nachteil, dass sie bei niedrigen Außentemperaturen zu einem starken Abkühlen des Scheibenrands führen, was die Wärmedämmung verschlechtert und zur Bildung von Kondenswasser auf der Scheibe an der Gebäudeinnenseite führen kann. Abstandshalter aus Materialien mit geringerer Wärmeleitfähigkeit, sogenannte "Warme-Kante"-Systeme, werden daher bevorzugt eingesetzt. Abstandshalter aus polymeren Materialien haben diese verbesserten wärmedämmenden Eigenschaften. Es sind zum Beispiel formstabile Kunststoffprofile bekannt, die in Hohlräumen oder Aussparungen Trockenmittel oder mit Trockenmittel gefüllte Matrix enthalten. Oft müssen diese aus mehreren Komponenten bestehenden Abstandshalter in mehreren einzelnen Prozessstufen zusammengebaut werden, was die Produktion aufwendig gestaltet. Dies trifft auch hinsichtlich der bereits diskutierten Isolierverglasung gemäß EP 2 733 295 A1 zu. Eine Möglichkeit, die Produktion zu vereinfachen, ist die einzelnen Bestandteile zu co-extrudieren und so Produktionsschritte einzusparen.

Die Verwendung thermoplastischer Materialien zur Herstellung von Abstandshaltern ist bekannt, die entweder als vorgefertigtes Profil hergestellt und anschließend zwischen den Scheiben fixiert werden, oder direkt auf die Scheibe extrudiert werden. Im ersten Fall müssen in einem separaten Produktionsschritt die Scheibenkontaktflächen des Abstandhalters mit einem Klebemittel versehen werden. Die Materialeigenschaften müssen genau aufeinander abgestimmt sein, um ein Ablösen des Abstandshalters von der Scheibe zu verhindern.

Spritzbare thermoplastische Abstandshalter (TPS Spacer) aus Dichtmaterialien wie Polyisobutylen und Butylkautschuk sind bekannt, die in der Matrix Trockenmittel enthalten, sodass ein Schritt zum Befüllen von Hohlkörpern in formstabilen Abstandhaltern entfällt. Zudem wird bei diesen Abstandshaltern kein separates Dichtmittel oder Klebemittel benötigt, da der Abstandshalter selbst bereits aus einem entsprechenden Dichtmaterial besteht. Diese Abstandshalter können direkt auf die Scheibe appliziert werden. Zur Herstellung von Isolierverglasungen mit mehr als zwei Scheiben können zwei Streifen Dichtmaterial gleichzeitig auf zwei Seiten einer mittleren Scheibe in gleicher Höhe eingespritzt werden, sodass die strengen Vorgaben bei der Montage von Dreifachisolierverglasungen erfüllt werden. Thermoplastische Abstandshalter sind ferner vorteilhaft in Bezug auf ihre vergleichsweise hohe mechanische Flexibilität, so dass unterschiedliche thermische Ausdehnung der einzelnen Komponenten einer Verglasung ausgeglichen werden kann. Dies ist vorteilhaft bei der Verwendung unterschiedlicher Scheibenmaterialien einer Isolierverglasung.

Ferner bieten thermoplastische Abstandshalter durch ihre Herstellung im Extrusionsverfahren eine hohe Flexibilität hinsichtlich der Formgebung der Isolierverglasung. Besonders bei Dreifachisolierverglasungen mit einer variablen Dicke der mittleren dritten Scheibe vereinfacht die Verwendung von thermoplastischen Spacern die Produktion erheblich. Formstabile Doppelabstandshalter für Dreifachisolierverglasungen, wie beispielsweise aus WO 2014 198431 A1 bekannt, stellen eine Nut mit konstanter Breite zur Aufnehme der mittleren Scheibe bereit. Die Dicke der dritten Scheibe kann hier nicht frei gewählt werden, da diese in ihrer Breite der Nut entsprechen muss. Eine Anpassung der Nutbreite an die jeweilige Scheibendicke ist in diesem Fall sehr aufwändig, da für jede Scheibendicke in Kombination mit jeder beliebigen Scheibenzwischenraumbreite ein entsprechender Abstandshalter zur Verfügung gestellt werden muss. Im Vergleich dazu wird ein thermoplastischer Abstandshalter nicht vorgefertigt, sondern unmittelbar in der gewünschten Breite in den Scheibenzwischenraum extrudiert.

Dreifachisolierverglasungen mit thermoplastischem Abstandshalter sind unter anderem aus US 2009 0139165 A1, WO 2015 197488 A1 und WO 2015 197491 A1 bekannt. Die dritte (mittlere) Scheibe der Isolierverglasung ist dabei jedoch in das thermoplastische Material selbst eingebracht, so dass in diesen Fällen eine unzureichende Stabilität des Randverbundes besteht.

US 7743584 B2 offenbart eine Dreifachisolierverglasung mit thermoplastischem Abstandshalter und einem metallischen Aufnahmeprofil, das die mittlere Scheibe in Position hält. Ein derartiges Profil verbessert die Stabilität des Randbereichs. Nichtsdestotrotz sind derartige Verglasungen im Zuge eines Einbruchsversuchs im Randbereich sehr einfach auszuhebeln.

Die Aufgabe der vorliegenden Erfindung ist es, eine Isolierverglasung bereitzustellen, die die genannten Nachteile nicht aufweist, insbesondere durchbruchsicher ist und einen verstärkten Randbereich aufweist, und somit eine höhere Einbruchsicherheit gewährleistet, sowie ein wirtschaftliches Verfahren zur Herstellung einer solchen Isolierverglasung bereitzustellen.

Die Aufgabe der vorliegenden Erfindung wird erfindungsgemäß gelöst durch eine Isolierverglasung nach dem unabhängigen Anspruch 1, Verfahren zu deren Herstellung und deren Verwendung. Bevorzugte Ausführungen der Erfindung gehen aus den Unteransprüchen hervor.

Die erfindungsgemäße Isolierverglasung umfasst mindestens eine erste Scheibe, eine zweite Scheibe, eine dritte Scheibe und einen Abstandshalter mit einem Aufnahmeprofil. Das Aufnahmeprofil umfasst einen ersten Schenkel, einen zweiten Schenkel und eine Bodenfläche und dient zur Aufnahme der dritten Scheibe. Die beiden Schenkel und die Bodenfläche bilden miteinander ein im Wesentlichen u-förmiges Profil, wobei der erste Schenkel und der zweite Schenkel des Aufnahmeprofils im umlaufenden Randbereich der dritten Scheibe an gegenüberliegenden Oberflächen der dritten Scheibe zumindest teilweise anliegen. Die Schenkel des Aufnahmeprofils bewirken dadurch eine seitliche Fixierung und Stabilisierung der dritten Scheibe. Die Bodenfläche umfasst die umlaufende Kante der dritten Scheibe und gewährleistet somit die umlaufende Fixierung der dritten Scheibe. Die Bodenfläche und auch die Schenkel des Aufnahmeprofils müssen dabei die dritte Scheibe nicht zwangsläufig unmittelbar kontaktieren, sondern begrenzen lediglich deren Position. Die Isolierverglasung weist einen äußeren Scheibenzwischenraum zwischen erster Scheibe, zweiter Scheibe und Abstandshalter auf. Ein erster innerer Scheibenzwischenraum befindet sich zwischen erster Scheibe und dritter Scheibe, während ein zweiter innerer Scheibenzwischenraum zwischen zweiter Scheibe und dritter Scheibe liegt. Der Abstandshalter weist mindestens einen Grundkörper auf, der ein Dichtmaterial und ein Trockenmittel enthält. Derartige Abstandshalter aus einem Dichtmaterial werden auch als thermoplastische Abstandshalter bezeichnet und besitzen, im Gegensatz zu starren Hohlkörperabstandshalters, eine verbesserte Flexibilität. Der Abstandshalter verbindet die erste Scheibe und die zweite Scheibe. Die dritte Scheibe umfasst mindestens eine thermoplastische polymere Scheibe, die die Durchbruchhemmung der Isolierverglasung erfindungsgemäß verbessert. Das Aufnahmeprofil weist ein Stützelement auf, das an der Bodenfläche des Aufnahmeprofils angebracht ist, und an der den Schenkeln abgewandten Seite der Bodenfläche entspringt. Das Stützelement ragt dabei zumindest teilweise in den Grundkörper hinein, wodurch das Aufnahmeprofil und die dritte Scheibe am Grundkörper verankert sind.

Die Vorteile dieser Scheibenanordnung ergeben sich aus der erfindungsgemäßen Kombination eines Abstandshalters aus einem Dichtmaterial und einem Trockenmittel (thermoplastischer Abstandshalter) und einem Aufnahmeprofil mit Stützelement und polymerer Scheibe. Dadurch kann eine besonders hohe Durchbruchhemmung und Einbruchsicherheit erzielt werden. Der thermoplastische Abstandshalter besitzt, im Vergleich zu nach dem Stand der Technik bekannten starren Abstandshaltern, eine höhere Flexibilität, so dass die unterschiedliche thermische Dehnung angrenzender Materialien sehr gut kompensiert werden kann. Dies ist besonders vorteilhaft in Kombination mit der Verwendung eines Aufnahmeprofils. Das Aufnahmeprofil kann die verschiedensten Materialien umfassen, beispielsweise Metall oder Kunststoffe. Diese besitzen einen anderen Ausdehnungskoeffizienten als die an den Abstandshalter grenzende erste Scheibe und zweite Scheibe, die beispielsweise aus Glas bestehen. Thermoplastische Abstandshalter kompensieren dies bedingt durch ihre höhere Flexibilität. Das Stützelement des Aufnahmeprofils ragt erfindungsgemäß in den Abstandshalter hinein. Da der Abstandshalter unmittelbar in den Scheibenzwischenraum extrudiert wird, kann dieser sich der Kontur des Aufnahmeprofils optimal anpassen, wodurch ein sehr stabiler Verbund entsteht und darüber hinaus eine zusätzliche Verklebung der Bauteile nicht notwendig ist. Das Stützelement des Aufnahmeprofils verbessert in Kombination mit dem thermoplastischen Abstandshalter, in den es eingebettet ist, die Randstabilität der Verglasung wesentlich. Das Stützelement erschwert ein Aufhebeln der Isolierverglasung im Randbereich, während der thermoplastische Abstandshalter bei einem Einbruchversuch dem Werkzeug flexibel nachgibt ohne die Anbindung an die Scheiben bzw. das Aufnahmeprofil zu verlieren. Ein starrer Abstandshalter würde im Gegensatz dazu unter Einwirkung des Werkzeugs ein Bruchverhalten aufweisen, wobei die entstehende Kante als neuer Ansatzpunkt für das Werkzeug dient. Die dritte Scheibe der Isolierverglasung kann dabei auch nicht als Ansatzpunkt für ein Werkzeug dienen, da das Aufnahmeprofil mit Stützelement verhindert, dass ein möglicher Einbrecher sein Werkzeug unter der dritten Scheibe ansetzen kann. Die beschriebenen Vorteile ergeben sich aus der erfindungsgemäßen Kombination eines thermoplastischen Abstandshalters mit dem Aufnahmeprofil mit Stützelement. Der Abstandshalter selbst weist eine geringe Wärmeleitfähigkeit auf, wodurch die Isolationseigenschaften der Isolierverglasung verbessert werden. Je nach Material des Aufnahmeprofils, zum Beispiel bei Verwendung von metallhaltigen Materialien, könnte das Aufnahmeprofil jedoch eine Wärmebrücke darstellen. Durch die erfindungsgemäße Anordnung des Aufnahmeprofils zumindest teilweise im Grundkörper des Abstandshalters findet eine thermische Entkopplung statt, wodurch die Bildung von Wärmebrücken vermieden wird. Das Material des Aufnahmeprofils kann somit in der erfindungsgemäßen Anordnung völlig frei gewählt werden ohne den Wärmedurchgangskoeffizienten des Aufnahmeprofils berücksichtigen zu müssen.

Die dritte Scheibe umfassend mindestens eine polymere Scheibe bewirkt eine erhöhte Durchbruchhemmung im flächigen Bereich der Scheibe. Bei Verwendung einer Glasscheibe als dritter Scheibe würde zwar ebenfalls eine höhere Randstabilität erreicht, jedoch ist der flächige Durchbruch der Scheiben einfach zu bewerkstelligen.

Eine dritte Scheibe mit mindestens einer polymeren Scheibe hemmt einen solchen Durchbruchversuch.

Durch die erfindungsgemäße Kombination eines thermoplastischen Abstandshalters mit einem Aufnahmeprofil mit Stützelement und einer polymeren Scheibe eingesetzt in diesem Aufnahmeprofil, wird somit eine Isolierverglasung bereitgestellt, die gleichzeitig den hohen thermischen Anforderungen an moderne Isolierverglasungen genügt und eine gute Durchbruchhemmung und Einbruchsicherheit gewährleistet. Die erfindungsgemäße Anordnung erreicht, je nach Wahl der Scheibendicken, die Schutzklasse P6B, P7B oder P8B.

Im Vergleich zu den nach dem Stand der Technik bekannten flächigen Polymer-Glas-Laminaten ist in der erfindungsgemäßen Anordnung eine Lamination der thermoplastischen polymeren Scheibe nicht notwendig. Eine thermische Belastung der polymeren Scheibe im Autoklavprozess entfällt somit.

Die Höhe des mindestens einen Stützelements bzw. der Schenkel des Aufnahmeprofils ist dabei als der lotrechte Abstand zwischen Bodenfläche des Aufnahmeprofils und von dieser am weitesten entfernten Punkt des entsprechenden Stützelements bzw. der Schenkel definiert. Sofern das Stützelement oder die Schenkel einen Winkel von 90° zur Bodenfläche des Aufnahmeprofils einnehmen, entspricht die Höhe dieser Elemente ihrer Länge. Die Länge ist dabei als der kürzeste Abstand zwischen Ansatzpunkt des Stützelements bzw. des Schenkels an der Bodenfläche des Aufnahmeprofils und dem weit entferntesten Punkt des entsprechenden Stützelements bzw. des Schenkels definiert.

Das mindestens eine Stützelement und/oder die Schenkel nehmen bevorzugt einen Winkel α von 45° bis 90° zur Bodenfläche des Aufnahmeprofils ein.

Das mindestens eine Stützelement ist besonders bevorzugt in einem Winkel von 90° zur Bodenfläche des Aufnahmeprofils angeordnet. Dies ist vorteilhaft bezüglich einer verbesserten Stabilität des Randbereichs der Isolierverglasung.

Die Schenkel nehmen besonders bevorzugt einen Winkel α von 80° bis 90°, insbesondere 85° bis 90° zur Bodenfläche des Aufnahmeprofils ein. Dabei sind die Schenkel in Richtung der dritten Scheibe geneigt, so dass die dritte Scheibe zwischen den Schenkeln klemmend fixiert werden kann. Eine derartige Klemmung erleichtert die Fixierung der dritten Scheibe, insbesondere sofern die dritte Scheibe die Bodenfläche des Aufnahmeprofils nicht berühren soll.

Die Länge der Schenkel beträgt bevorzugt 5 mm bis 40 mm, besonders bevorzugt 8 mm bis 30 mm, beispielsweise 11 mm bis 16 mm bei handelsüblichen Scheibenabmaßen oder 15 mm bis 30 mm bei sehr großen Scheiben zur verbesserten Ausdehnungskompensation.

Bei einem Winkel α von 90° entspricht die Höhe der Schenkel der beschriebenen Schenkellänge.

Sofern der Winkel α innerhalb der genannten Bereiche von 90° abweicht, ergibt sich die Höhe der Schenkel bei bekanntem Winkel und bekannter Schenkellänge aus geometrischen Gesetzmäßigkeiten.

Die Höhe des Stützelements beträgt bevorzugt 2 mm bis 20 mm. In diesen Bereichen tritt eine besonders effektive Stabilisierung des Randbereichs auf. Besonders bevorzugt liegt die Höhe des Stützelements zwischen 4 mm bis 16 mm. Dieser Bereich hat sich als besonders vorteilhaft erwiesen, da einerseits ein ausreichender Einbruchschutz sowie eine gute Positionierbarkeit des Aufnahmeprofils anhand des Stützelements gewährleistet werden können und andererseits ein Stützelement dieser Höhe bei Bedarf vollständig vom Grundkörper umschlossen werden kann. Da das Stützelement bevorzugt in einem Winkel von 90° zur Bodenfläche des Aufnahmeprofils angebracht ist, entspricht die Höhe des Stützelements in diesem Fall dessen Länge.

Die Materialstärke des Aufnahmeprofils beträgt bevorzugt 0,5 mm bis 5 mm, besonders bevorzugt 1 mm bis 3 mm. Insbesondere letzterer Bereich hat sich in der Praxis als guter Kompromiss zwischen ausreichender Stabilität und möglichst niedriger Wärmeleitfähigkeit erwiesen.

Das Stützelement ist bevorzugt vollständig vom Grundkörper des Abstandshalters und/oder einem an den Grundkörper angrenzenden primären Dichtmittel oder sekundären Dichtmittel umschlossen. Das Stützelement ragt somit nicht in den inneren Scheibenzwischenraum hinein. Dies ist vorteilhaft, da die Seitenflächen des Stützelements vollständig vom Grundkörper und/oder primären oder sekundären Dichtmittel kontaktiert sind und das Stützelement in seiner Position stabilisiert wird. Die mechanische Stabilität der Anordnung wird somit verbessert.

Bevorzugt ist das Stützelement dabei zu mindestens 70%, bevorzugt zu mindestens 90%, bezogen auf die Höhe des Stützelements innerhalb des Grundkörpers angebracht. Das Stützelement ragt somit nur zu einem geringen Anteil in den äußeren Scheibenzwischenraum hinein. Neben der erwähnten mechanischen Stabilisierung ist dies auch im Hinblick auf eine thermische Optimierung der Anordnung sinnvoll. Das Aufnahmeprofil besitzt, je nach Materialzusammensetzung, einen wesentlich höheren Wärmedurchgangskoeffizienten als der Grundkörper, das primäre Dichtmittel und das sekundäre Dichtmittel. Somit ist es thermisch vorteilhaft, wenn ein möglichst großer Anteil des Stützelements innerhalb des Grundkörpers liegt und das primäre und/oder sekundäre Dichtmittel im äußeren Scheibenzwischenraum in ihrer gesamten Höhe zur thermischen Entkopplung beitragen.

Je nach angewandtem Montageprozess der Isolierverglasung kann ein geringer Anteil des Stützelements, der über den Grundkörper hinaus in den äußeren Scheibenzwischenraum ragt, die Positionierung und Fixierung des Aufnahmeprofils mit dritter Scheibe während der Montage der ersten Scheibe, der zweiten Scheibe und des Grundkörpers vereinfachen. Der Anteil des Stützelements, der nicht vom Grundkörper umschlossen wird, kann dabei der Fixierung des Aufnahmeprofils während der Extrusion des Grundkörpers dienen. Dazu genügt schon ein geringer Anteil des Stützelements, beispielsweise von 5 % bis 30 %, bevorzugt von 5 % bis 15 % der Gesamthöhe des Stützelements.

In einer bevorzugten Ausführungsform ragen der erste Schenkel und der zweite Schenkel des Aufnahmeprofils mit dritter Scheibe zumindest teilweise in den Grundkörper des Abstandshalters hinein. Dadurch wird sowohl eine verbesserte mechanische Stabilität im Randbereich erzielt, als auch das Aufnahmeprofil optisch kaschiert.

Bevorzugt liegen der erste Schenkel und der zweite Schenkel zu mindestens 15 %, bevorzugt zu 20 % bis 50 %, bezogen auf die Höhe der Schenkel innerhalb des Grundkörpers. Die Bodenfläche des Aufnahmeprofils wird somit vom Grundkörper verdeckt, wodurch die Isolierverglasung optisch ansprechender gestaltet wird. Darüber hinaus wird die seitliche Stabilität des Aufnahmeprofils dadurch verbessert, dass der Grundkörper auch Teile der Schenkel umgibt. Auch dies trägt zur Erhöhung der Stabilität des Randbereichs und somit zur Verbesserung der Einbruchsicherheit bei.

In einer besonders bevorzugten Ausführungsform ist das Aufnahmeprofil einstückig ausgeformt. Dies ist besonders vorteilhaft im Hinblick auf die mechanische Stabilität des Aufnahmeprofils sowie eine einfache und kostengünstige Montage.

Bevorzugt enthält das Aufnahmeprofil einen metallischen Werkstoff, besonders bevorzugt besteht es aus einem metallischen Werkstoff. Die mechanische Festigkeit metallischer Werkstoffe ist in der Regel höher als die anderer Materialien, wie beispielsweise Kunststoffe. Ferner neigen metallische Materialien im Gegensatz zu Kunststoffen nicht zu einem Splitterbruch bei Gewalteinwirkung.

Beispiele für geeignete Materialien zur Herstellung des Aufnahmeprofils sind Aluminium, Eisen, Stahl, Edelstahl und/oder Gemische und/oder Legierungen davon.

In einer besonders bevorzugten Ausführungsform ist das Aufnahmeprofil einstückig aus Aluminium oder Aluminiumlegierungen ausgeformt. Aluminium oder Aluminiumlegierungen haben den Vorteil, dass sie eine hohe spezifische Festigkeit bei geringem Gewicht aufweisen. Demnach kann bei Verwendung dieser Werkstoffe eine hohe Randfestigkeit und Einbruchsicherheit erreicht werden ohne das Gewicht der Isolierverglasung nennenswert zu erhöhen.

Um die Stabilität des Randverbundes weiter zu verbessern kann das Aufnahmeprofil auch mehr als ein Stützelement aufweisen, wodurch die Widerstandsfähigkeit der Verglasung gegenüber einem Einbruchversuch durch Aushebeln der Isolierverglasung weiter verbessert wird.

In einer bevorzugten Ausführungsform verfügt das Aufnahmeprofil über zwei Stützelemente, die in einer Linie mit den Schenkeln des Aufnahmeprofils verlaufen. Somit bilden die Stützelemente eine Verlängerung der Schenkel an der den Schenkeln gegenüberliegenden Seite der Bodenfläche. Dadurch ergibt sich ein Aufnahmeprofil mit im Wesentlichen H-förmiger Grundform. Dies ist besonders vorteilhaft hinsichtlich der mechanischen Stabilität des Aufnahmeprofils. Die Definition der im Wesentlichen H-förmigen Grundform schließt dabei insbesondere Ausführungsformen mit geneigten Schenkeln ein.

Der zwischen mehreren Stützelementen befindliche Bereich des Aufnahmeprofils kann ganz oder teilweise mit dem Grundkörper des Abstandshalters und/oder mit einem primären Dichtmittel gefüllt sein. Dies ist vorteilhaft im Hinblick auf eine verbesserte thermische Isolation. Bevorzugt ist der Bereich zwischen den Stützelementen des Aufnahmeprofils mit dem Grundkörper des Abstandshalters gefüllt. Dies ist im Hinblick auf thermische und mechanische Eigenschaften der Isolierverglasung besonders vorteilhaft.

Das Aufnahmeprofil enthält optional eine Einlage, die ein Verrutschen der dritten Scheibe und eine dadurch bedingte Geräuschentwicklung beim Öffnen und Schließen des Fensters verhindert. In diesem Fall kann das Aufnahmeprofil breiter als die darin montierte Scheibe sein, so dass die erwähnte Einlage zusätzlich in das Aufnahmeprofil eingesetzt werden kann. Die Einlage trägt dabei zur Kompensation der thermischen Ausdehnung der dritten Scheibe bei Erwärmung bei, so dass unabhängig von den klimatischen Bedingungen eine spannungsfreie Fixierung gewährleistet ist. Alternativ kann die Einlage auch nur in Teilbereichen des Aufnahmeprofils, beispielsweise einem zwischen der Bodenfläche und/oder den Schenkeln und der umlaufenden Kante der dritten Scheibe liegenden Leerraum, angebracht sein. In diesem Fall sind nur die eventuellen Leerräume innerhalb des Aufnahmeprofils ganz oder teilweise durch die Einlage gefüllt.

In einer bevorzugten Ausführungsform ist die Einlage so in das Aufnahmeprofil eingebracht, dass der erste innere Scheibenzwischenraum, der zwischen erster Scheibe und dritter Scheibe liegt, mit dem zweiten inneren Scheibenzwischenraum, der zwischen dritter Scheibe und zweiter Scheibe liegt, so verbunden ist, dass ein Luft- bzw. Gasaustausch möglich ist. Dadurch wird ein Druckausgleich zwischen den inneren Scheibenzwischenräumen ermöglicht, was im Vergleich zu einer Ausführung mit hermetisch abgeschlossenen inneren Scheibenzwischenräumen zu einer deutlichen Reduktion der Belastung der dritten Scheibe führt. Um diesen Druckausgleich zu ermöglichen, ist die Einlage bevorzugt mit Unterbrechungen im Aufnahmeprofil angebracht. Das heißt, die Einlage ist nicht durchgehend entlang des gesamten Aufnahmeprofils angebracht, sondern nur in einzelnen Bereichen, in denen die Scheibe fixiert wird, um ein Klappern der Scheibe im Aufnahmeprofil zu verhindern. In den Bereichen ohne Einlage kann ein Druckausgleich stattfinden. Alternativ besteht die Einlage aus einem gasdurchlässig ausgeführten Material, zum Beispiel einem porösen Schaum, wodurch ebenfalls ein Druckausgleich zwischen angrenzenden inneren Scheibenzwischenräumen möglich ist.

Die Einlage enthält bevorzugt ein Elastomer, besonders bevorzugt einen Butylkautschuk.

Die Einlage kann entweder nach Fertigung des Grundkörpers abschnittsweise oder vollständig in diesen eingebracht werden. In einer möglichen Ausführungsform wird die Einlage nach Herstellung des Aufnahmeprofils in dieses extrudiert.

In einer bevorzugten Ausführungsform berührt die dritte Scheibe an mindestens einer Scheibenkante nicht die Bodenfläche des Aufnahmeprofils. Zwischen dritter Scheibe und Bodenfläche des Aufnahmeprofils verbleibt somit an mindestens einer Kante ein Leerraum. Dadurch wird eine ungehinderte Längenausdehnung der thermoplastischen polymeren Scheibe der dritten Scheibe ermöglicht und das Auftreten von Spannungen vermieden. Im Falle einer rechteckigen Verglasung besteht bevorzugt mindestens anjeweils einer der beiden gegenüberliegenden Kanten ein solcher Leerraum zwischen dritter Scheibe und Bodenfläche des Aufnahmeprofils. Somit ist eine ungehinderte Ausdehnung entlang beider Scheibenkanten der dritten Scheibe möglich. Die genannten Leerräume können auch durch eine Einlage gefüllt sein. Diese ist leicht komprimierbar und hindert die dritte Scheibe dadurch nicht in ihrer Ausdehnung.

Die Verglasungsinnenraumfläche des Abstandshalters ist als die Fläche des Abstandhalters definiert, die nach Einbau des Abstandhalters in einer Isolierverglasung in Richtung des Innenraums der Verglasung weist. Die Verglasungsinnenraumfläche gliedert sich dabei in eine erste Verglasungsinnenraumfläche, die zwischen der ersten und der dritten Scheibe liegt, und eine zweite Verglasungsinnenraumfläche, die zwischen der dritten und der zweiten Scheibe angeordnet ist. Die Außenfläche des Abstandshalters ist die Fläche, die nach Einbau in einer Isolierverglasung in Richtung des äußeren Scheibenzwischenraums weist. Der äußere Scheibenzwischenraum wird von der ersten Scheibe, der zweiten Scheibe und der Außenfläche des Abstandshalters begrenzt.

Der Grundkörper enthält bevorzugt ein Dichtmaterial aus der Gruppe der Hotmelt-Klebstoffe, bevorzugt aus der der Butyl-basierten Hotmelt-Klebstoffe, bevorzugt Butylkautschuk und/oder Polyisobutylen und ein Trockenmittel, das bevorzugt Kieselgele, Molekularsiebe, CaCl₂, Na₂SO₄, Aktivkohle, Silikate, Bentonite, Zeolithe und/oder Gemische davon enthält. Weitere geeignete Kombinationen aus Dichtmittel und Trockenmittel sind dem Fachmann aus Anwendungen für thermoplastische Abstandshalter (TPS) bekannt. Dies ist besonders bei der Verwendung von polymeren Scheiben vorteilhaft, da eine Vielzahl polymerer Materialien auf ihrer Oberfläche eine hohe Restfeuchte aufweisen. Um diese polymeren Materialien in einer Verbundscheibe laminieren zu können, ist zunächst eine Trocknung der polymeren Scheiben empfehlenswert. In der erfindungsgemäßen Isolierverglasung ist dieser Trocknungsschritt nicht erforderlich, da das im Grundkörper befindliche Trockenmittel die erwähnte Restfeuchte aufnimmt.

In einer möglichen Ausführungsform ist ein primäres Dichtmittel im äußeren Scheibenzwischenraum angrenzend an die Außenfläche des Grundkörpers in den äußeren Scheibenzwischenraum eingebracht, wodurch die Dichtigkeit der Isolierverglasung verbessert und deren Fehleranfälligkeit gesenkt wird.

Optional ist das primäre Dichtmittel zusätzlich auch an den Scheibenkontaktflächen zwischen Grundkörper und äußeren Scheiben (erste und zweite Scheibe) angeordnet. In dieser Anordnung ist der Grundkörper an drei Seiten von primärem Dichtmittel umgeben, d.h. die erste und zweite Scheibenkontaktfläche umfassen das primäre Dichtmittel, aber nicht den Grundkörper. Das primäre Dichtmittel hat bessere Hafteigenschaften als das Material des Grundkörpers, das zusätzlich zum Dichtmaterial auch Trockenmittel enthält. Durch die Anordnung des primären Dichtmittels zusätzlich an den Scheibenkontaktflächen werden die Dichtigkeit und die Stabilität der Anordnung verbessert.

In einer möglichen Ausführungsform sind der Grundkörper und das primäre Dichtmittel einteilig ausgeführt, bevorzugt co-extrudiert. Durch die Co-Extrusion entsteht ein besonders fester Verbund zwischen den einzelnen Bestandteilen ohne den Einsatz zusätzlicher Haftmittel.

Das primäre Dichtmittel enthält bevorzugt Butylkautschuk, Polyisobutylen, PolyolefinKautschuk, Copolymere und/oder Gemische davon.

Bevorzugt befindet sich im äußeren Scheibenzwischenraum angrenzend an den Abstandshalter, oder sofern vorhanden an das primäre Dichtmittel, ein sekundäres Dichtmittel. Das sekundäre Dichtmittel kann sowohl in Kombination mit einem primären Dichtmittel verwendet werden, als auch unmittelbar an den Grundkörper des Abstandshalters grenzen. Das sekundäre Dichtmittel füllt den äußeren Scheibenzwischenraum in seiner gesamten Breite zwischen der ersten Scheibe und der zweiten Scheibe aus. Dieses sekundäre Dichtmittel bewirkt eine Verklebung der ersten und der zweiten Scheibe und gewährleistet somit eine ausreichende mechanische Stabilität der Isolierverglasung. Das sekundäre Dichtmittel enthält bevorzugt ein Polymer oder silanmodifiziertes Polymer, besonders bevorzugt organische Polysulfide, Silikone, raumtemperaturvernetzenden Silikonkautschuk, hochtemperaturvernetzenden Silikonkautschuk, peroxidisch-vernetzten Silikonkautschuk und/oder additions-vernetzten-Silikonkautschuk, Polyurethane und/oder Butylkautschuk. Derartige Stoffe haben eine sehr gute Haftung auf Glas, sodass das sekundäre Dichtmittel vor allem der Verklebung der Scheiben dient und zur mechanischen Stabilität der Isolierverglasung beiträgt.

Die erste Scheibe und/oder die zweite Scheibe enthalten Glas und/oder Polymere, bevorzugt Quarzglas, Borosilikatglas, Kalk-Natron-Glas, Polymethylmethacrylat und/oder Gemische davon.

Bevorzugt umfassen die erste Scheibe und/oder die zweite Scheibe, bevorzugt die erste Scheibe und die zweite Scheibe, mindestens eine Glasscheibe. Im Gegensatz zu polymeren Materialien weist Glas eine hohe Kratzbeständigkeit auf und ist somit ein bevorzugter Werkstoff für die außen liegenden Scheiben der Verglasung.

Die dritte Scheibe umfasst mindestens eine thermoplastische polymere Scheibe, die Polycarbonat, Polymethylmethacrylat und/oder Gemische oder Copolymere davon enthält. Dies ist von besonderem Vorteil, da diese Materialien eine hohe Durchbruchhemmung aufweisen. Optional vorhandene weitere Scheiben der dritten Scheibe können aus den für thermoplastische polymere Scheiben genannten Materialien oder auch aus den für die erste und zweite Scheibe genannten Glasmaterialien bestehen.

In einer möglichen Ausführungsform können die erste Scheibe, die zweite Scheibe und/oder die dritte Scheibe auch als Verbundscheibe ausgeführt sein. Im Fall der ersten Scheibe und der zweiten Scheibe handelt es sich vorteilhafterweise um Glas-Glas-Verbunde aus mindestens zwei Glasscheiben, die über eine Laminierfolie miteinander verklebt sind. Dies verbessert die Durchbruchhemmung der erfindungsgemäßen Isolierverglasung weiter. Da es sich in diesem Fall nur um einen Verbund zweier Glasscheiben handelt, können auch kostengünstige Laminierfolien, beispielsweise aus Polyvinylbutyral, verwendet werden. Eine derartige erfindungsgemäße Verglasung hat weiterhin den Vorteil, dass die polymere Scheibe der dritten Scheibe durch das Aufnahmeprofil fixiert wird und nicht laminiert werden muss.

In einer weiteren möglichen Ausführungsform ist die zweite Scheibe der Isolierverglasung in Richtung der Schutzseite, also der Seite der Scheibe auf der sich die zu schützenden Personen oder Gegenstände befinden, orientiert und als Verbundscheibe umfassend mindestens eine Glasscheibe und mindestens eine thermoplastische polymere Scheibe ausgeführt. Die thermoplastische polymere Scheibe ist dabei zur Schutzseite ausgerichtet und verhindert, dass im Zerstörungsfall Splitter in den Schutzbereich abgegeben werden.

Die Angriffsseite der Verglasung ist dabei als die äußere Scheibenseite definiert, von der ausgehend mit einem Angriff auf die Verglasung zu rechnen ist. Im Falle einer Verglasung zum Einbruchsschutz ist dies die zur Gebäudeaußenseite gerichtete Scheibenseite. Die Schutzseite bezeichnet die entgegengesetzte Verglasungsseite, auf der sich der schützenswerte Gegenstand bzw. die zu schützenden Personen befinden. Bei der genannten Anwendung der Verglasung zum Einbruchsschutz wäre dies die zum Gebäudeinneren gerichtete Verglasungsseite.

Optional kann auch die dritte Scheibe, unabhängig von der Ausführungsform der ersten und der zweiten Scheibe, als Verbundscheibe ausgeführt sein. Dabei werden bevorzugt mehrere polymere Scheiben miteinander zur dritten Scheibe laminiert. Bei polymeren Scheiben werden beispielsweise Laminierfolien aus thermoplastischem Polyurethan verwendet. Bevorzugt besitzen die mehreren polymeren Scheiben der dritten Scheibe die gleiche Zusammensetzung und somit auch das gleiche Dehnungsverhalten bei Erwärmung. Bei thermischer Belastung treten demnach keine Spannungsunterschiede und somit keine ungleichmäßige Verformung der Scheibe auf. Bei Lamination verschiedenartiger Scheiben, beispielsweise polymere Materialien und Glas, ist dies ein häufig auftretendes Problem.

Die Laminierfolien enthalten zumindest ein thermoplastisches Polymer, bevorzugt Ethylenvinylacetat (EVA), Polyvinylbutyral (PVB) oder Polyurethan (PU) oder Gemische oder Copolymere oder Derivate davon. Die Dicke der Laminierfolien beträgt bevorzugt von 0,2 mm bis 2 mm, besonders bevorzugt von 0,3 mm bis 1,5 mm. Besonders bevorzugt wird zur Lamination zweier Glasscheiben Polyvinylbutyral in einer Dicke von beispielsweise 0,38 mm oder 0,76 mm eingesetzt. Bei Lamination einer thermoplastischen polymeren Scheibe mit einer gleichgearteten Scheibe oder einer Glasscheibe verwendet der Fachmann bevorzugt Polyurethan mit einer Dicke von beispielsweise 1,25 mm.

Die erste und/oder die zweite Scheibe können auch als Einscheibensicherheitsglas oder als teilvorgespanntes Glas ausgeführt werden. Einscheibensicheheitsglas verhindert durch sein typisches Bruchmuster die Entstehung spitzer Scherben. Teilvorgespanntes Glas weist hingegen eine höhere Resttragfähigkeit nach Beschädigung der Scheibe auf.

Der Scheibenzwischenraum der Isolierverglasung ist bevorzugt mit einem inerten Gas, bevorzugt mit einem Edelgas, vorzugsweise Argon oder Krypton gefüllt, die den Wärmeübergangswert im Scheibenzwischenraum reduzieren.

Die erste Scheibe und die zweite Scheibe verfügen über eine Dicke von 1 mm bis 50 mm, bevorzugt 3 mm bis 16 mm, besonders bevorzugt 3 mm bis 10 mm, wobei die Scheiben auch unterschiedliche Dicken haben können.

In einer möglichen Ausführungsform hat die dritte Scheibe eine Dicke von 3 mm bis 30 mm, bevorzugt von 3 mm bis 20 mm und besonders bevorzugt von 4 mm bis 12 mm. Die Dicke der dritten Scheibe ist dabei abhängig von der zu erreichenden Schutzklasse der Verglasung.

In einer möglichen Ausführungsform werden die Scheibendicken der ersten, zweiten und dritten Scheibe asymmetrisch gewählt, beispielsweise beträgt die Dicke der ersten Scheibe 3 mm, die Dicke der zweiten Scheibe 4 mm und die Dicke der dritten Scheibe 5 mm. Eine solche asymmetrische Kombination der Scheibendicken führt zu einer erheblichen Verbesserung der akustischen Dämpfung.

Die Erfindung umfasst ferner ein Verfahren zur Herstellung der erfindungsgemäßen Isolierverglasung. In einem ersten Schritt des erfindungsgemäßen Verfahrens wird ein Aufnahmeprofil an der umlaufenden Kante einer dritten Scheibe angebracht. Danach werden eine erste Scheibe, eine zweite Scheibe und die dritte Scheibe mit Aufnahmeprofil zueinander beabstandet positioniert. Dabei wird die dritte Scheibe zwischen der ersten Scheibe und der zweiten Scheibe angeordnet. Die Unterseite des Stützelements dient dabei als Bezugskante bei Positionierung der Scheiben. In einem nächsten Schritt wird ein Abstandshalter aus einem Grundkörper enthaltend ein Dichtmaterial und ein Trockenmittel in den Zwischenraum zwischen erster Scheibe und zweiter Scheibe extrudiert. Der extrudierte Grundkörper umfasst das Aufnahmeprofil der dritten Scheibe dabei zumindest teilweise. Die so vorbereitete dritte Scheibe kann nun auf einer klassischen dem Fachmann bekannten Doppelverglasungsanlage verarbeitet werden. Dabei wird die Scheibenanordnung aus erster Scheibe, zweiter Scheibe und dritter Scheibe mit Abstandhalter verpresst, wodurch eine stabile Klebeverbindung erzeugt wird. Die kostspielige Installation zusätzlicher Anlagenkomponenten oder ein Zeitverlust bei Mehrfachdurchlauf einer Anlage können somit vermieden werden. Dies ist besonders vorteilhaft hinsichtlich eines Produktivitätsgewinns und einer Kostensenkung.

In einer vorteilhaften Ausführungsform des erfindungsgemäßen Verfahrens wird der Grundkörper beinhaltend ein Trockenmittel zusammen mit einem primären Dichtmittel co-extrudiert.

Bevorzugt wird der innere Scheibenzwischenraum der Scheibenanordnung mit einem Schutzgas gefüllt.

Die Erfindung umfasst des Weiteren die Verwendung einer erfindungsgemäßen Isolierverglasung als Gebäudeinnenverglasung, Gebäudeaußenverglasung und/oder Fassadenverglasung.

Im Folgenden wird die Erfindung anhand von Zeichnungen näher erläutert. Die Zeichnungen sind rein schematische Darstellungen und nicht maßstabsgetreu. Sie schränken die Erfindung in keiner Weise ein.

Es zeigen:
- Figur 1a und 1b:: eine schematische Darstellung der erfindungsgemäßen Isolierverglasung mit erster Scheibe, zweiter Scheibe und dritter Scheibe in einem Aufnahmeprofil mit einem Stützelement,
- Figur 2 a und 2b:: eine mögliche Ausführungsform der erfindungsgemäßen Isolierverglasung mit erster Scheibe, zweiter Scheibe und dritter Scheibe in einem Aufnahmeprofil mit zwei Stützelementen,
- Figur 3 a und 3b:: eine weitere Ausführungsform der erfindungsgemäßen Isolierverglasung mit erster Scheibe, zweiter Scheibe und dritter Scheibe in einem Aufnahmeprofil mit zwei Stützelementen und geneigten Schenkeln,
- Figur 4:: eine Ausführungsform der erfindungsgemäßen Isolierverglasung nach Figuren 2a und 2b, wobei die erste Scheibe, die zweite Scheibe und die dritte Scheibe als Verbundscheiben ausgeführt sind,
- Figur 5:: ein Flussdiagramm einer möglichen Ausführungsform des erfindungsgemäßen Verfahrens zur Herstellung einer Isolierverglasung mit erster Scheibe, zweiter Scheibe und dritter Scheibe in einem Aufnahmeprofil mit Stützelement.

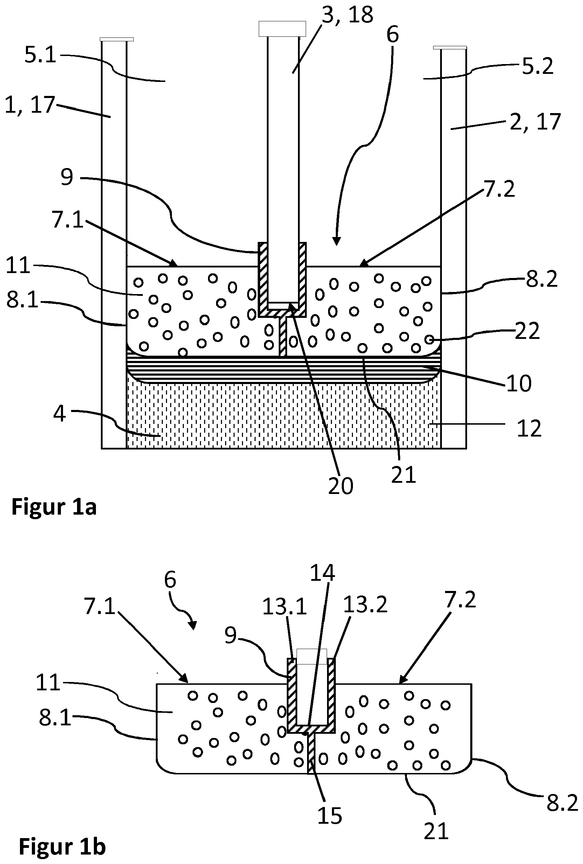

Figur 1a und 1b zeigen eine schematische Darstellung des eine erfindungsgemäßen Isolierverglasung sowie eines Abstandshalters mit erfindungsgemäßem Aufnahmeprofil im Querschnitt. Zwischen einer ersten Scheibe 1 und einer parallel dazu angeordneten zweiten Scheibe 2 ist ein umlaufender Abstandhalter 6 angebracht, der einen Grundkörper 11 umfasst. Der Grundkörper 11 enthält ein Dichtmaterial mit Trockenmittel 22, wie zum Beispiel Butyl mit Molsieb. Der an die erste Verglasungsinnenraumfläche 7.1 bzw. die zweite Verglasungsinnenraumfläche 7.1 des Abstandhalters 6 angrenzende erste innere Scheibenzwischenraum 5.1 bzw. zweite innere Scheibenzwischenraum 4.2 wird als der von der ersten Scheibe 1 und der dritten Scheibe 3 sowie von der dritten Scheibe 3 und der zweiten Scheibe 2 begrenzte Raum definiert. Die erste Scheibe 1 grenzt an die erste Scheibenkontaktfläche 8.1 und die zweite Scheibe 2 grenzt an die zweite Scheibenkontaktfläche 8.2 des Abstandshalters 6. Die dritte Scheibe 3 ist in ein Aufnahmeprofil 9 eingesetzt, wobei das Aufnahmeprofil 9 über eine Bodenfläche 14, einen ersten Schenkel 13.1, einen zweiten Schenkel 13.2 und ein Stützelement 15 verfügt. Der erste Schenkel 13.1 und der zweite Schenkel 13.2 liegen an gegenüberliegenden Oberflächen der dritten Scheibe 3 an und fixieren diese in ihrer Position. An zwei benachbarten Kanten der dritten Scheibe berührt diese die Bodenfläche des Aufnahmeprofils nicht. Dieser Abstand zwischen Scheibenkante und Bodenfläche gewährleistet, dass in Richtung beider Scheibenkanten eine ungehinderte Längenausdehnung der dritten Scheibe 3 möglich ist. Besonders die thermoplastische polymere Scheibe der dritten Scheibe zeigt aufgrund ihrer Materialzusammensetzung eine thermische Ausdehnung, die durch den Leerraum zwischen Scheibe und Bodenfläche des Aufnahmeprofils gewährleistet ist. Die Schenkel 13.1, 13.2 sind bis zu einer Höhe von 50%, bezogen auf die Gesamthöhe der Schenkel von dem Grundkörper umschlossen. Auf der den Schenkeln 13.1, 13.2 gegenüberliegenden Seite der Bodenfläche entspringt das Stützelement 15. Dieses ist entlang seiner gesamten Höhe vom Grundkörper 11 des Abstandshalters 6 umgeben. Die Schenkel 13.1, 13.2 des Aufnahmeprofils haben eine Länge von 12 mm, wobei die Länge der Höhe der Schenkel entspricht, da der Winkel α 90° beträgt. Die Höhe (und Länge) des Stützelements 15 beträgt 10 mm. Die Materialstärke des Stützelements, die auch der Dicke der Bodenfläche 14 entspricht, liegt bei 1 mm. Ein äußerer Scheibenzwischenraum 4 wird begrenzt durch die erste Scheibe, die zweite Scheibe und die Außenfläche 21 des Grundkörpers 11. Im äußeren Scheibenzwischenraum 4 befindet sich angrenzend an die Außenfläche 22 des Grundkörpers 11 ein primäres Dichtmittel 10 aus Butyl. An das primäre Dichtmittel 12 grenzt ein sekundäres Dichtmittel 12, das von einem organischen Polysulfid gebildet wird. Die dritte Scheibe 3 besteht aus einer thermoplastischen polymeren Scheibe 18 aus Polycarbonat mit einer Dicke von 8 mm. Die erste Scheibe 1 und die zweite Scheibe 2 bestehen aus jeweils einer Glasscheibe 17 aus Kalk-Natron-Glas mit einer Dicke von 5 mm.

Die Isolierverglasung gemäß Figuren 1a und 1b erreicht eine Durchbruchhemmung entsprechend der Schutzklasse P8B sowie eine erhöhte Einbruchssicherheit gegen ein Aufhebeln der Verglasung im Randbereich.

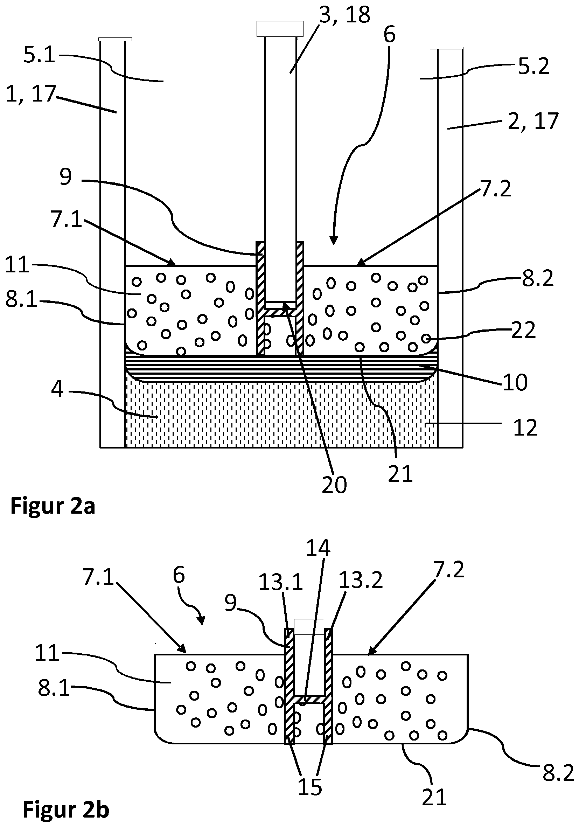

Figuren 2a und 2b zeigen eine weitere mögliche Ausführungsform der erfindungsgemäßen Isolierverglasung mit erster Scheibe 1, zweiter Scheibe 2 und dritter Scheibe 3 in einem Aufnahmeprofil 9 umfassend zwei Stützelemente 15. Der allgemeine Aufbau entspricht dem in Figuren 1a und 1b beschriebenen. Im Gegensatz dazu weist das Aufnahmeprofil 9 gemäß Figuren 2a und 2b zwei Stützelemente 15 auf. Diese befinden sich unterhalb der Schenkel 13.1, 13.2 des Aufnahmeprofils 9 und bilden somit eine Verlängerung der Schenkel 13.1, 13.2. Dadurch ergibt sich ein H-förmiges Aufnahmeprofil 9, das die Widerstandsfähigkeit der Verglasung im Randbereich weiter erhöht. Die Schenkel 13.1, 13.2 des Aufnahmeprofils haben eine Länge von 13 mm, wobei die Länge der Höhe der Schenkel entspricht, da der Winkel α 90° beträgt. Die Höhe (und Länge) der Stützelemente 15 beträgt 9 mm. Die Materialstärke des Stützelements, die auch der Dicke der Bodenfläche 14 entspricht, liegt bei 2 mm.

Die Isolierverglasung gemäß Figuren 2a und 2b erreicht eine Durchbruchhemmung entsprechend der Schutzklasse P8B sowie eine weiter erhöhte Einbruchssicherheit gegen ein Aufhebeln der Verglasung im Randbereich.

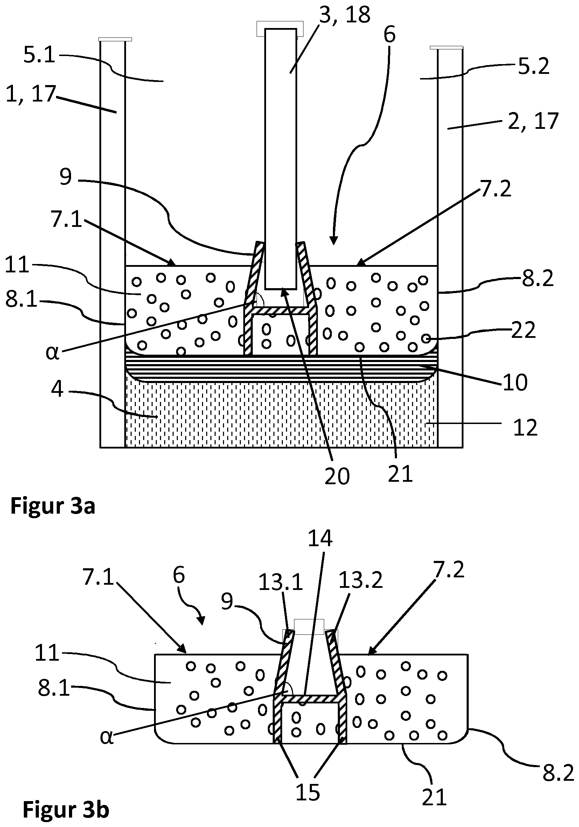

Figur 3 a und 3b zeigen eine weitere Ausführungsform der erfindungsgemäßen Isolierverglasung mit erster Scheibe 1, zweiter Scheibe 2 und dritter Scheibe 3 in einem Aufnahmeprofil 9 mit zwei Stützelementen 15 und geneigten Schenkeln 13.1, 13.2. Der allgemeine Aufbau entspricht dem in Figuren 2a und 2b beschriebenen. Im Gegensatz dazu bilden der erste Schenkel 13.1 und der zweite Schenkel 13.2 einen Winkel α von jeweils 87° mit der Bodenfläche 14 des Aufnahmeprofils 9. Dadurch wird die Fixierung der dritten Scheibe 3 verbessert, da die Schenkel 13.1, 13.2 einen Anpressdruck auf die dritte Scheibe 3 ausüben und diese zwischen den Schenkeln klemmend fixiert ist. Diese verbesserte Art der Fixierung ist vor allem vorteilhaft um einen gleichmäßigen vollständig umlaufenden Leerraum zwischen der umlaufenden Kante 20 der dritten Scheibe 3 und der Bodenfläche 14 zu erzielen. Die Schenkel 13.1, 13.2 des Aufnahmeprofils haben eine Länge von 15 mm. Die Höhe (und Länge) der Stützelemente 15 beträgt 9 mm. Die Materialstärke des Stützelements, die auch der Dicke der Bodenfläche 14 entspricht, liegt bei 2 mm.

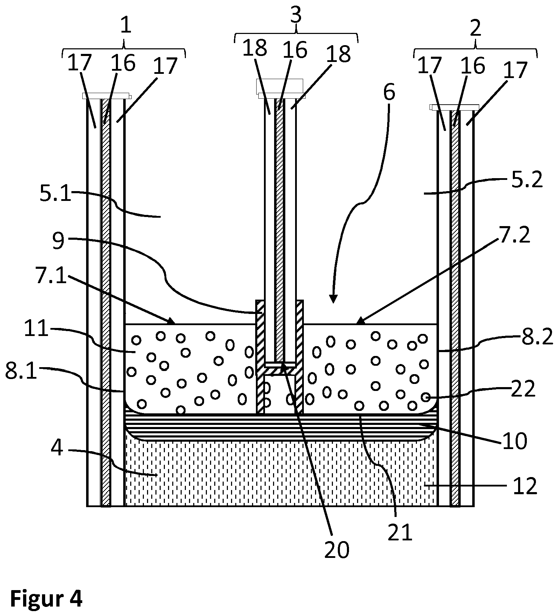

Figur 4 zeigt eine weitere Ausführungsform der erfindungsgemäßen Isolierverglasung, wobei die erste Scheibe, die zweite Scheibe und die dritte Scheibe als Verbundscheiben ausgeführt sind. Der Aufbau entspricht in den Grundzügen dem in Figuren 2a und 2b gezeigten. Die erste Scheibe 1 besteht aus zwei Glasscheiben 17 aus Kalk-Natron-Glas mit einer Dicke von jeweils 5 mm, die über eine Laminierfolie 16 aus Polyvinylbutyral mit einer Dicke von 0,76 mm miteinander laminiert sind. Die zweite Scheibe 2 besteht aus zwei Glasscheiben 17 aus Kalk-Natron-Glas mit einer Dicke von jeweils 3 mm, die über eine Laminierfolie 16 aus Polyvinylbutyral mit einer Dicke von 0,76 mm miteinander laminiert sind. Die erste Scheibe 1 stellt im Einbauzustand die Angriffsseite der Verglasung dar. Die dritte Scheibe 3 besteht aus zwei thermoplastischen polymeren Scheiben 18 aus Polycarbonat mit einer Dicke von jeweils 6 mm, die über eine Laminierfolie 16 aus thermoplastischem Polyurethan in einer Dicke von 1 mm miteinander verbunden sind.

Durch den Einsatz von Verbundscheiben erreicht die Isolierverglasung gemäß Figur 4 eine verbesserte Durchbruchhemmung entsprechend der Schutzklasse P8B. Die Einbruchsicherheit entspricht der in Figuren 2a und 2b diskutierten.

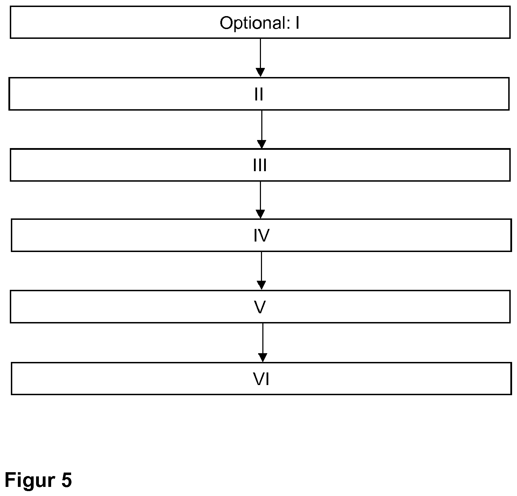

Figur 5 zeigt ein Flussdiagramm einer möglichen Ausführungsform des erfindungsgemäßen Verfahrens zur Herstellung einer Isolierverglasung umfassend die Schritte:
I optional: die erste Scheibe 1, die zweite Scheibe 2 und/oder die dritte Scheibe 3 als Verbundscheibe aus mindestens zwei Glasscheiben 17 und/oder thermoplastischen polymeren Scheiben 18 und mindestens einer Laminierfolie 16 laminiert werden, wobei die dritte Scheibe 3 mindestens eine thermoplastische polymere Scheibe 18 umfasst
II Anbringen eines Aufnahmeprofils 9 an der umlaufenden Kante einer dritten Scheibe 3
III Positionieren der ersten Scheibe 1, der zweiten Scheibe 2 und der dritten Scheibe 3 beabstandet zueinander, wobei die dritte Scheibe 3 zwischen der ersten Scheibe 1 und der zweiten Scheibe 2 angeordnet wird
IV Extrusion eines Abstandshalters 6 aus einem Grundkörper 11 enthaltend ein Dichtmaterial und ein Trockenmittel 22 in den Zwischenraum zwischen erster Scheibe 1 und zweiter Scheibe 2, so dass der Grundkörper das Aufnahmeprofil 9 der dritten Scheibe 3 zumindest teilweise umfasst
V Verpressen der Scheibenanordnung aus den Scheiben 1, 2, 3 und dem Abstandshalter 6 miteinander
VI vollständiges Verfüllen des äußeren Scheibenzwischenraums 4 mit einem sekundären Dichtmittel 12

### Bezugszeichenliste

- 1: erste Scheibe
- 2: zweite Scheibe
- 3: dritte Scheibe
- 4: äußerer Scheibenzwischenraum
- 5: innerer Scheibenzwischenraum
- 5.1: erster innerer Scheibenzwischenraum
- 5.2: zweiter innerer Scheibenzwischenraum
- 6: Abstandshalter
- 7: Verglasungsinnenraumfläche
- 7.1: erste Verglasungsinnenraumfläche
- 7.2: zweite Verglasungsinnenraumfläche
- 8: Scheibenkontaktflächen
- 8.1: erste Scheibenkontaktfläche
- 8.2: zweite Scheibenkontaktfläche
- 9: Aufnahmeprofil
- 10: primäres Dichtmittel
- 11: Grundkörper
- 12: sekundäres Dichtmittel
- 13: Schenkel
- 13.1: erster Schenkel
- 13.2: zweiter Schenkel
- 14: Bodenfläche
- 15: Stützelement
- 16: Laminierfolie
- 17: Glasscheibe
- 18: thermoplastische polymere Scheibe
- 20: umlaufende Kante der dritten Scheibe (3)
- 21: Außenfläche
- 22: Trockenmittel
- α: Winkel zwischen Bodenfläche 14 des Aufnahmeprofils 9 und einem der Schenkel 13.1, 13.2

## Patentansprüche

1. Isolierverglasung mindestens umfassend eine erste Scheibe (1), eine zweite Scheibe (2), eine dritte Scheibe (3) und einen Abstandshalter (6) mit einem Aufnahmeprofil (9) umfassend einen ersten Schenkel (13.1), einen zweiten Schenkel (13.2) und eine Bodenfläche (14) zur Aufnahme der dritten Scheibe (3), einen äußeren Scheibenzwischenraum (4) zwischen erster Scheibe (1), zweiter Scheibe (2) und Außenfläche (21) des Abstandshalters (6), einen ersten inneren Scheibenzwischenraum (5.1) zwischen erster Scheibe (1), dritter Scheibe (3) und einer ersten Verglasungsinnenraumfläche (7.1) des Abstandshalters (6) und einen zweiten inneren Scheibenzwischenraum (5.2) zwischen zweiter Scheibe (2), dritter Scheibe (3) und einer zweiten Verglasungsinnenraumfläche (7.2) des Abstandshalters (6), wobei
- der Abstandshalter (6) mindestens einen Grundkörper (11) umfassend ein Dichtmaterial und ein Trockenmittel (22) enthält und der Abstandshalter (6) ein thermoplastischer Abstandshalter ist,
- der Abstandshalter (6) die erste Scheibe (1) und die zweite Scheibe (2) verbindet,
- der erste Schenkel (13.1) und der zweite Schenkel (13.2) des Aufnahmeprofils (9) im umlaufenden Randbereich der dritten Scheibe (3) an gegenüberliegenden Oberflächen der dritten Scheibe (3) zumindest teilweise anliegen und die Bodenfläche (14) die umlaufende Kante (20) der dritten Scheibe (3) umfasst, **dadurch gekennzeichnet, dass**
- die dritte Scheibe (3) mindestens eine thermoplastische polymere Scheibe (18) umfasst,
- das Aufnahmeprofil (9) ein Stützelement (15) aufweist, das an der dem ersten Schenkel (13.1) und dem zweiten Schenkel (13.2) gegenüberliegenden Seite der Bodenfläche (14) angebracht ist, und zumindest teilweise in den Grundkörper (11) hineinragt.

2. Isolierverglasung nach Anspruch 1, wobei das Stützelement (15) vollständig vom Grundkörper (11) des Abstandshalters (6) und/oder einem an den Grundkörper angrenzenden primären Dichtmittel (10) oder sekundären Dichtmittel (12) umschlossen ist.

3. Isolierverglasung nach Anspruch 2, wobei das Stützelement (15) zu mindestens 70%, bevorzugt zu mindestens 90%, bezogen auf die Höhe des Stützelements (15) innerhalb des Grundkörpers (11) liegt.

4. Isolierverglasung nach einem der Ansprüche 1 bis 3, wobei der erste Schenkel (13.1) des Aufnahmeprofils (9), der zweite Schenkel (13.2) des Aufnahmeprofils (9) und die dritte Scheibe (3) zumindest teilweise in den Grundkörper (11) des Abstandshalters (6) hineinragen.

5. Isolierverglasung nach Anspruch 4, wobei der erste Schenkel (13.1) und der zweite Schenkel (13.2) zu mindestens 15 %, bevorzugt zu 20 % bis 50 %, bezogen auf die Höhe der Schenkel (13.1, 13.2) innerhalb des Grundkörpers (11) liegen.

6. Isolierverglasung nach einem der Ansprüche 1 bis 5, wobei das Aufnahmeprofil (9) einstückig ausgeformt ist.

7. Isolierverglasung nach einem der Ansprüche 1 bis 6, wobei das Aufnahmeprofil (9) einen metallischen Werkstoff enthält, bevorzugt aus einem metallischen Werkstoff besteht.

8. Isolierverglasung nach einem der Ansprüche 1 bis 7, wobei der Grundkörper (11) mindestens ein Dichtmaterial, bevorzugt einen Hotmelt-Klebstoff, Polyisobutylen und/oder Butylkautschuk und ein Trockenmittel (22), bevorzugt Kieselgele, Molekularsiebe, CaCl₂, Na₂SO₄, Aktivkohle, Silikate, Bentonite, Zeolithe und/oder Gemische davon enthält.

9. Isolierverglasung nach einem der Ansprüche 1 bis 8, wobei sich im äußeren Scheibenzwischenraum (4) angrenzend an den Abstandshalter (6) ein primäres Dichtmittel (10) befindet, das bevorzugt Butylkautschuk, Polyisobutylen, PolyolefinKautschuk, Copolymere und/oder Gemische davon enthält.

10. Isolierverglasung nach einem der Ansprüche 1 bis 9, wobei sich im äußeren Scheibenzwischenraum (4) angrenzend an den Abstandshalter (6) oder an das primäre Dichtmittel (10) ein sekundäres Dichtmittel (12) befindet, das bevorzugt ein Polymer oder silanmodifiziertes Polymer, besonders bevorzugt organische Polysulfide, Silikone, raumtemperaturvernetzenden Silikonkautschuk, hochtemperaturvernetzenden Silikonkautschuk, peroxidischvernetzten Silikonkautschuk und/oder additions-vernetzten-Silikonkautschuk, Polyurethane und/oder Butylkautschuk, umfasst.

11. Isolierverglasung nach einem der Ansprüche 1 bis 10, wobei die erste Scheibe (1) und/oder die zweite Scheibe (2) mindestens eine Glasscheibe (17) umfasst.

12. Isolierverglasung nach einem der Ansprüche 1 bis 11, wobei die erste Scheibe (1), die zweite Scheibe (2) und/oder die dritte Scheibe (3) eine Verbundscheibe ist.

13. Verfahren zur Herstellung einer Isolierverglasung nach einem der Ansprüche 1 bis 12, wobei zumindest
a) ein Aufnahmeprofil (9) an der umlaufenden Kante (20) einer dritten Scheibe (3) angebracht wird,
b) eine erste Scheibe (1), eine zweite Scheibe (2) und die dritte Scheibe (3) zueinander beabstandet positioniert werden, wobei die dritte Scheibe (3) zwischen der ersten Scheibe (1) und der zweiten Scheibe (2) angeordnet wird,
c) ein Abstandshalter (6) aus einem Grundkörper (11) enthaltend ein Dichtmaterial und ein Trockenmittel (22) so in den Zwischenraum zwischen erster Scheibe (1) und zweiter Scheibe (2) extrudiert wird, dass der Grundkörper das Aufnahmeprofil (9) der dritten Scheibe (3) zumindest teilweise umfasst,
d) die Scheibenanordnung aus den Scheiben (1, 2, 3) und dem Abstandshalter (6) miteinander verpresst wird, wodurch eine stabile Klebeverbindung erzeugt wird,
wobei der Abstandshalter (6) ein thermoplastischer Abstandshalter ist.

14. Verwendung der Isolierverglasung nach einem der Ansprüche 1 bis 12 als durchbruchhemmende Verglasung, bevorzugt im Gebäudeinnenbereich, im Gebäudeaußenbereich und/oder in Fassaden.

## Claims

1. Insulating glazing at least comprising a first pane (1), a second pane (2), a third pane (3), and a spacer (6) having a holding profiled element (9) comprising a first leg (13.1), a second leg (13.2), and a bottom surface (14) for holding the third pane (3), an outer interpane space (4) between the first pane (1), the second pane (2), and the outer surface (21) of the spacer (6), a first inner interpane space (5.1) between the first pane (1), the third pane (3), and a first glazing interior surface (7.1) of the spacer (6), and a second inner interpane space (5.2) between the second pane (2), the third pane (3), and a second glazing interior surface (7.2) of the spacer (6), wherein
- the spacer (6) contains at least one main body (11) comprising a sealing material and a desiccant (22),
- the spacer (6) connects the first pane (1) and the second pane (2),
- the first leg (13.1) and the second leg (13.2) of the holding profiled element (9) lie at least partially against opposite surfaces of the third pane (3) in the peripheral edge region of the third pane (3), and the bottom surface (14) surrounds the peripheral edge (20) of the third pane (3),
**characterized in that**
- the third pane (3) includes at least one thermoplastic polymeric pane (18),
- the holding profiled element (9) has a supporting element (15), which is attached to the side of the bottom surface (14) opposite the first leg (13.1) and the second leg (13.2), and protrudes at least partially into the main body (11).

2. Insulating glazing according to claim 1, wherein the supporting element (15) is completely enclosed by the main body (11) of the spacer (6) and/or a primary sealant (10) or secondary sealant (12) adjacent the main body.

3. Insulating glazing according to claim 2, wherein the supporting element (15) is at least 70%, preferably at least 90%, based on the height of the supporting element (15), within the main body (11).

4. Insulating glazing according to one of claims 1 through 3, wherein the first leg (13.1) of the holding profiled element (9), the second leg (13.2) of the holding profiled element (9), and the third pane (3) protrude at least partially into the main body (11) of the spacer (6).

5. Insulating glazing according to claim 4, wherein the first leg (13.1) and the second leg (13.2) are at least 15%, preferably 20% to 50%, based on the height of the legs (13.1, 13.2), within the main body (11).

6. Insulating glazing according to one of claims 1 through 5, wherein the holding profiled element (9) is formed in one piece.

7. Insulating glazing according to one of claims 1 through 6, wherein the holding profiled element (9) contains a metallic material, preferably consists of a metallic material.

8. Insulating glazing according to one of claims 1 through 7, wherein the main body (11) contains at least one sealing material, preferably a hot-melt adhesive, polyisobutylene, and/or butyl rubber, and a desiccant (22), preferably silicate gels, molecular sieves, CaCl₂, Na₂SO₄, activated carbon, silicates, bentonites, zeolites, and/or mixtures thereof.

9. Insulating glazing according to one of claims 1 through 8, wherein a primary sealant (10) that preferably contains butyl rubber, polyisobutylene, polyolefin rubber, copolymers, and/or mixtures thereof is situated in the outer interpane space (4) adjacent the spacer (6).

10. Insulating glazing according to one of claims 1 through 9, wherein situated in the outer interpane space (4) adjacent the spacer (6) or the primary sealant (10) is a secondary sealant (12) that preferably comprises preferably a polymer or silane-modified polymer, particularly preferably organic polysulfides, silicones, room-temperature-vulcanizing silicone rubber, high-temperature-vulcanizing silicone rubber, peroxide-vulcanizing silicone rubber, and/or addition-vulcanizing silicone rubber, polyurethanes, and/or butyl rubber.

11. Insulating glazing according to one of claims 1 through 10, wherein the first pane (1) and/or the second pane (2) comprises at least one glass pane (17).

12. Insulating glazing according to one of claims 1 through 11, wherein the first pane (1), the second pane (2), and/or the third pane (3) is a composite pane.

13. Method for producing an insulating glazing according to one of claims 1 through 12, wherein at least
a) a holding profiled element (9) is attached at the peripheral edge (20) of a third pane (3),
b) a first pane (1), a second pane (2), and the third pane (3) are positioned at a distance from one another, wherein the third pane (3) is arranged between the first pane (1) and the second pane (2),
c) a spacer (6) consisting of a main body (11) containing a sealing material and a desiccant (22) is extruded into the interpane space between the first pane (1) and the second pane (2) such that the main body at least partially encloses the holding profiled element (9) of the third pane (3),
d) the pane assembly consisting of the panes (1, 2, 3) and the spacer (6) is pressed together, as result of which a stable adhesive bond is generated,
wherein the spacer (6) is a thermoplastic spacer.

14. Use of the insulating glazing according to one of claims 1 through 12 as a breakthrough-resistant glazing, preferably in the building interior, in the building exterior, and/or in façades.

## Revendications

1. Vitrage isolant comportant au moins une première plaque (1), une deuxième plaque (2), une troisième plaque (3) et un espaceur (6) ayant un profilé récepteur (9) comportant une première aile (13.1), une seconde aile (13. 2) et une surface de fond (14) pour la réception de la troisième plaque (3), un espace externe entre plaques (4) entre la première plaque (1), la deuxième plaque (2) et la surface externe (21) de l'espaceur (6), un premier espace interne entre plaques (5.1) entre la première plaque (1), la troisième plaque (3) et une première surface d'espace interne de vitrage (7.1) de l'espaceur (6) et un second espace interne entre plaques (5.2) entre la deuxième plaque (2), la troisième plaque (3) et une seconde surface d'espace interne de vitrage (7.2) de l'espaceur (6), dans lequel
- l'espaceur (6) contient au moins un corps de base (11) comportant un matériau d'étanchéité et un agent dessicatif (22) et l'espaceur (6) est un espaceur thermoplastique ;
- l'espaceur (6) relie la première plaque (1) et la deuxième plaque (2) ;
- la première aile (13.1) et la seconde aile (13.2) du profilé récepteur (9) sont appliquées au moins partiellement contre des surfaces opposées de la troisième plaque (3) dans la région de bordure périphérique de la troisième plaque (3) et la surface de fond (14) entoure le bord périphérique (20) de la troisième plaque (3) ;
**caractérisé par le fait que**
- la troisième plaque (3) comporte au moins une plaque polymère thermoplastique (18) ;
- le profilé récepteur (9) présente un élément de support (15), qui est appliqué sur le côté de la surface de fond (14) opposé à la première aile (13.1) et à la seconde aile (13.2), et pénètre au moins partiellement dans le corps de base (11).

2. Vitrage isolant selon la revendication 1, dans lequel l'élément de support (15) est entouré totalement par le corps de base (11) de l'espaceur (6) et/ou par un agent d'étanchéité primaire (10) ou un agent d'étanchéité secondaire (12) adjacent au corps de base.

3. Vitrage isolant selon la revendication 2, dans lequel l'élément de support (15) se situe à l'intérieur du corps de base (11) à au moins 70 %, de préférence à au moins 90 %, par rapport à la hauteur de l'élément de support (15).

4. Vitrage isolant selon l'une des revendications 1 à 3, dans lequel la première aile (13.1) du profilé récepteur (9), la seconde aile (13.2) du profilé récepteur (9) et la troisième plaque (3) pénètrent au moins partiellement dans le corps de base (11) de l'espaceur (6).

5. Vitrage isolant selon la revendication 4, dans lequel la première aile (13.1) et la seconde aile (13.2) se situent à l'intérieur du corps de base (11) à au moins 15 %, de préférence à 20 % à 50 %, par rapport à la hauteur des ailes (13.1, 13.2).

6. Vitrage isolant selon l'une des revendications 1 à 5, dans lequel le profilé récepteur (9) est formé d'un seul tenant.

7. Vitrage isolant selon l'une des revendications 1 à 6, dans lequel le profilé récepteur (9) contient un matériau métallique, de préférence est constitué d'un matériau métallique.

8. Vitrage isolant selon l'une des revendications 1 à 7, dans lequel le corps de base (11) contient au moins un matériau d'étanchéité, de préférence une colle thermofusible, du polyisobutylène et/ou du caoutchouc butyle et un agent dessicatif (22), de préférence des gels de silice, des tamis moléculaires, CaCl₂, Na₂SO₄, du charbon actif, des silicates, de la bentonite, des zéolithes et/ou les mélanges de ceux-ci.

9. Vitrage isolant selon l'une des revendications 1 à 8, dans lequel un agent d'étanchéité primaire (10) se trouve dans l'espace externe entre plaques (4) adjacent à l'espaceur (6), lequel agent d'étanchéité primaire (10) contient, de préférence, du caoutchouc butyle, du polyisobutylène du caoutchouc de polyoléfine, les copolymères et/ou les mélanges de ceux-ci.

10. Vitrage isolant selon l'une des revendications 1 à 9, dans lequel un agent d'étanchéité secondaire (12) se trouve dans l'espace externe entre plaques (4) adjacent à l'espaceur (6) ou à l'agent d'étanchéité primaire (10), lequel agent d'étanchéité secondaire (12) contient, de préférence, un polymère ou un polymère modifié par silane, de façon particulièrement préférée, des polysulfures organiques, des silicones, du caoutchouc de silicone réticulant à température ambiante, du caoutchouc de silicone réticulant à haute température, du caoutchouc de silicone réticulé par peroxyde et/ou du caoutchouc de silicone réticulé par addition, des polyuréthanes et/ou du caoutchouc butyle.

11. Vitrage isolant selon l'une des revendications 1 à 10, dans lequel la première plaque (1) et/ou la seconde plaque (2) comporte (nt) au moins une plaque de verre (17).

12. Vitrage isolant selon l'une des revendications 1 à 11, dans lequel la première plaque (1), la deuxième plaque (2) et/ou la troisième plaque (3) est/sont une plaque feuilletée.

13. Procédé de fabrication d'un vitrage isolant selon l'une des revendications 1 à 12, dans lequel au moins
a) un profilé récepteur (9) est appliqué sur la bordure périphérique (20) d'une troisième plaque (3) ;
b) une première plaque (1), une deuxième plaque (2) et la troisième plaque (3) sont positionnées à distance les unes des autres, la troisième plaque (3) étant disposée entre la première plaque (1) et la deuxième plaque (2) ;
c) un espaceur (6) fait d'un corps de base (11) contenant un matériau d'étanchéité et un agent dessicatif (22) est extrudé dans l'espace intermédiaire entre la première plaque (1) et la deuxième plaque (2) de telle sorte que le corps de base comporte au moins partiellement le profilé récepteur (9) de la troisième plaque (3) ;
d) l'assemblage de plaques fait des plaques (1, 2, 3) et de l'espaceur (6) est compressé conjointement, ce par quoi une liaison par collage stable est produite, l'espaceur (6) étant un espaceur thermoplastique.

14. Utilisation du vitrage isolant selon l'une des revendications 1 à 12 en tant que vitrage anti-rupture, de préférence dans la région intérieure de bâtiments, dans la région extérieure de bâtiments et/ou dans des façades.
